# EUROPEAN PATENT SPECIFICATION

(11) **EP 4 086 607 B1**
(45) Date of publication and mention of the grant of the patent: **04.12.2024**
(21) Application number: 21172793.8
(22) Date of filing: 07.05.2021
(51) Int. Cl.: G01N 1/40, G01N 15/14, G01N 23/205, G01N 15/10

(54) **DEVICE AND SYSTEM FOR BUNCHING OF SAMPLE PARTICLES**
VORRICHTUNG UND SYSTEM ZUR BÜNDELUNG VON PROBENPARTIKELN
DISPOSITIF ET SYSTÈME DE REGROUPEMENT DE PARTICULES D'ÉCHANTILLONS

(43) Date of publication of application: 09.11.2022
(73) Proprietor: Deutsches Elektronen-Synchrotron DESY, 22607 Hamburg (DE)
(72) Inventor: Chapman, Henry N., 22607 Hamburg (DE); Bajt, Sasa, 22607 Hamburg (DE); Ebrahimifard, Reza, 22607 Hamburg (DE); Awel, Salah, 22607 Hamburg (DE)
(74) Representative: Bird & Bird LLP - Hamburg

(56) References cited:
- EP-A1- 3 643 406
- US-A1- 2011 134 426
- US-A1- 2014 008 307
- US-B2- 10 646 870
- ZHENG LI ET AL: "Acoustic funnel and buncher for nanoparticle injection", ARXIV.ORG, CORNELL UNIVERSITY LIBRARY, 201 OLIN LIBRARY CORNELL UNIVERSITY ITHACA, NY 14853, 20 March 2018 (2018-03-20), XP081364598, DOI: 10.1103/PHYSREVAPPLIED.11.064036

## Description

The invention relates to a device and a system for bunching of sample particles.

Serial femtosecond crystallography (SFX) known from the prior art uses intense and short pulses of X-rays from a free-electron laser to record many snapshot diffraction patterns of particles, in particular protein crystals, that flow across the X-ray beam generated by an X-ray source. Serial femtosecond crystallography was developed primarily to overcome the issue of radiation damage that may occur in conventional particle crystallography using X-ray tubes or synchrotron radiation, for example. The exposure to the X-ray beam modifies the structure under investigation, requiring a relatively large structure size of the particles, in particular large crystals, which are often difficult to grow, and cryogenic temperatures, which may also modify the structure from the physiologically relevant one. The short pulses of the X-ray free-electron laser (XFELs) are detected and the resulting structural information gained before destruction of the particle under X-ray exposure takes place, allowing much greater exposures, and hence much smaller particles which do not need to be cryogenically cooled. However, the particle is completely vaporized after the X-ray exposure, so measurements must be carried out repeatedly, each time with a fresh particle. One way to accomplish that is to flow a slurry comprising many distributed particles in a liquid jet across the X-ray beam. However, the duty cycle of the X-ray pulses is low when comparing the duration of pulses to the duration between pulses. Therefore, to increase the chance of the X-ray pulses intercept the randomly arriving particles at the interaction region, a high concentration of particles must be injected, resulting in a low sample delivery efficiency (the fraction of injected particle intercepted by the X-ray pulses). In the contrary, a high concentration of particles distributed in the fluid often leads to clogging of the capillary used to deliver the particles into the X-ray beam. In practice, a low concentration of samples must be injected, resulting a low hit fraction (the fraction of X-ray intercepting a particle). Therefore, measurements must be carried out over a longer period of time to collect enough diffraction patterns from particles.

EP 3 643 406 A1 discloses a generic device of the kind described in the preamble of claim 1. US 2014/008307 A1 also refers to a microfluidic device, in particular for acoustic particle separation. US 10 646 870 B2 and US 2011/134426 A1 refer to microfluidic systems for acoustic flow cytometry.

ZHENG LI ET AL: "Acoustic funnel and buncher for nanoparticle injection", ARXIV.ORG, CORNELL UNIVERSITY LIBRARY, 201 OLIN LIBRARY CORNELL UNIVERSITY ITHACA, NY 14853, 20 March 2018, relates to improvement of nanoparticle injection to overcome longitudinal and transversal mismath of particle-stream and x-ray-beam size in single-particle/single-molecule imaging at x-ray free-electron lasers.

The object of the present invention is to provide a device and a system, which allow an efficient examination of particles distributed in a fluid by radiation, in particular X-ray radiation.

According to a first aspect of the present invention, the object is solved by a device according to claim 1. The device comprises a body, being formed as a chip, from a body material being a chip material, a fluid channel extending through the body, an acoustic wave guide embedded in the body, and an acoustic wave condenser embedded in the body. The fluid channel forms a fluid path through the body, such that the fluid channel is configured to guide a flow of a sample fluid, in which sample particles are distributed, through the fluid channel along the fluid path. The wave guide is configured to guide an acoustic reference wave, when transmitted via the body to the wave guide, to an application region of the fluid channel. The wave condenser at least partly forms the application region of the fluid channel. Further, the wave condenser is configured to generate a standing acoustic wave in the application region from the reference wave when the wave guide guides the reference wave into the application region resulting in an acoustic force field in the application region, which pushes sample particles when entering the application region into at least one bunch of sample particles in the application region.

The device offers the advantage that particles distributed in a fluid and carried by a fluid flow through the fluid channel of the device can be concentrated by means of the device into a bunch within the application area. A plurality of particles is arranged in the bunch, such that the concentration of particles within this bunch is significantly higher than the concentration of particles within the fluid upstream of the application area. After the bunch of particles is generated by means of the device, the bunch may be transported downstream with the flow of the fluid to be subsequently examined by means of X-rays. However, it is also possible that the bunch of particles generated in the application area of the fluid channel of the device is examined by means of the X-rays. In this case, the X-rays also penetrate the device.

The particles are preferably formed by crystals, in particular protein crystals, or cells.

Due to the increased concentration of the particles in the bunch by means of the device, a particularly high efficiency in the examination of the particles by means of X-rays is possible. If the X-rays are directed at the application area itself or at an area downstream of the application area rather than at a section of the fluid channel upstream of the application area, and if it is also ensured that the X-rays are directed at the bunch of particles generated by means of the device, then there is a significantly higher probability that the X-rays will encounter at least one of the particles in the bunch. The interaction with the particles modifies the X-radiation so that the resulting modified X-radiation is detectable by means of a detector. Based on the measured, modified X-ray radiation, information about the structural configuration of the particles can be obtained.

To achieve the bunching of the particles in the application area, the device comprises a body, wherein the fluid channel of the device extends through the body. The fluid channel thus serves to carry a fluid, which is also referred to as a sample fluid. Within the fluid, the particles are distributed. The particles may also be referred to as sample particles. The fluid channel forms a fluid path through the body, such that the fluid channel guides the fluid in a transport direction along the fluid path. An initial concentration of sample particles distributed in the sample fluid may exist at an inlet end of the fluid channel, where the sample fluid is introduced into the fluid channel. Preferably, the fluid channel extends from the inlet end to an outlet end. The application region of the fluid channel may be provided between these two ends. Thus, the application region of the fluid channel may be defined by a portion of the fluid channel disposed between the inlet-side end of the fluid channel and the outlet-side end of the fluid channel.

The application region of the fluid channel is at least partially formed by the wave condenser of the device. For example, in the application region of the fluid channel, a channel wall of the fluid channel may be completely or partially formed by the wave condenser. The wave condenser is configured to generate a standing acoustic wave in the application region based on a reference wave when said reference wave enters the application region of the fluid channel. By the wave condenser, the application area of the fluid channel may be shaped, for example, such that a maximum diameter of the application region of the fluid channel corresponds to half the wavelength of the reference wave, so that when the reference wave enters the application region, it is reflected from opposite inner sides of the application region of the fluid channel, thereby creating the standing acoustic wave. Thus, the wave condenser may be configured and/or formed to localize the acoustic force field in the application region. The acoustic force field may be an acoustic pressure field or may be a result of the acoustic pressure field. The standing acoustic wave causes an acoustic force field within the application area, which acts on the particles transported by the fluid into the application area, causing the particles to be compressed and/or concentrated into a bunch within the application area.

The particles distributed in the sample fluid will move in the presence of an acoustic force field when the acoustic properties of particles and sample fluid are different, which is preferably assumed. Such a difference may relate to an acoustic contrast factor, density of the particles and the fluid, compressibility of the particles and fluid, as well as sound speed of the particles and the fluid. The magnitude of the acoustic force of the acoustic force field on particles depends on several factors such as particle size, acoustic energy density, acoustic wave frequency, and acoustic contrast factor. The direction of movement of the particles in an acoustic field may depend on the acoustic contrast factor so that particles may move from a region of high to low or low to high pressure, but in either case, a concentration of the particles will take place. The high- and low-pressure regions are effectively produced by the acoustic standing wave. Preferably, a primary axial (PA) acoustic radiation force of the standing acoustic wave moves particles in the application region to the nodal plane of the standing acoustic wave. It can be for example used for lining up the particles to the middle of the application region of the fluid channel. A gradient of the acoustic force field from high pressure antinodes to the low-pressure nodes may also generate a primary lateral (PL) acoustic radiation force for the bunching of the particles within the application region of the fluid channel. The primary lateral (PL) acoustic radiation force may also cause a tapping of the particles, such that the particles can be held against the flow of the fluid in the application area. The wave condenser may be configured to create localized acoustic pressure zone with a high-pressure gradient. In the high-pressure gradient, the PL acoustic radiation force may hold particles within the application region against drag force of the fluid flow in transport direction and/or the PA acoustic radiation force may push particles to the middle of the channel, which supports and/or causes the particle bunching.

The wave condenser may form a resonance cavity for the acoustic reference wave in the application of the fluid channel. This resonance cavity may localize the acoustic force field in the application region. The wave condenser may be coupled to wave guide in the boundary of the fluid channel.

It has been found to be challenging to direct the acoustic reference wave into the application region. Therefore, in addition to the wave condenser, the device includes a wave guide configured to guide the acoustic reference wave. The wave guide and the wave condenser are both embedded in the body of the device, respectively. Further, the wave guide is preferably embedded in the body of the device such that when the acoustic reference wave encounters the body of the device, it is at least partially captured by the wave guide and directed into the application region of the fluid channel. Therefore, in order to generate the standing acoustic wave in the application region of the fluid channel, the wave guide and the wave condenser cooperate. In particular, due to the energetic effect of this interaction, the desired acoustic wave can be generated by means of the device in the application region with an intensity that allows the particles to be concentrated by means of the resulting acoustic force field.

In principle, the wave guide can be designed in very different ways. For example, the wave guide may be single-piece or multi-piece. The wave guide may also be formed as an integral part of the body of the device. In this case, the wave guide may be formed by one or more portions of the body of the device. It had been found to be advantageous if the wave guide forms at least two mutually spaced edges at which the acoustic reference wave is at least partially reflected. The edges are not necessarily formed by physical structural edges. The at least two mutually spaced edges may be disposed within the body of the device such that they guide the acoustic reference wave to the fluid channel application region. Each of the edges may be formed by a transition from one material to another material. Additionally or alternatively, each of the edges may be formed by a junction of an acoustic impedance within the body of the device. Each edge may therefore be created by a cavity within the body of the device.

The wave guide may be configured to cause a higher acoustic intensity to the application region. As a result, the acoustic reference wave can be generated by normal size transducers instead of small ones to transfer the acoustic power of a large area to small area in microfluidic chip. The small (micron) size transducers have challenges in fabrication, soldering, and implementation in microfluidic device for such application The power of the small size acoustic transducer may be deliberately concentrated by the wave guide to the application region of the fluid channel instead of attenuating it because of actuating the entire body or device.

The body of the device is formed as a chip. The body material of the body is chip material. The chip may be a glass chip. However, the chip may also be formed at least partly by different material.

The fluid channel is formed by the body. The fluid channel may be formed as an integral part of the body. This integration may prevent further acoustic impedance step or acoustic impedance mismatch in the transition from the body to the fluid channel. The wave condenser forms at least part of the application region of the fluid channel. It is therefore preferred that the wave condenser is also formed as an integral part of the body of the device. In other words, the wave condenser is formed by the body of the device. It is also possible that the body of the device is formed in one piece. In this case, it is preferred that both the fluid channel and the condenser are integrally formed by the body of the device. The wave guide is formed by the body. Preferably, the wave guide is an integral part of the body of the device. The integral design of the wave guide allows particularly precise guiding of the acoustic reference wave into the application region of the fluid channel.

Additionally, the wave guide is formed by at least one cavity in the body. Preferably, the wave guide is formed by at least two cavities in the body of the device. Preferably, the wave guide is formed by exactly two separated cavities in the body. With at least two cavities, the cavities may be spaced apart such that the wave guide is formed to direct the acoustic reference wave in the region of the body between the cavities to the application region of the fluid channel. Each cavity may be formed as a closed cavity. Each cavity may create a reflective boundary for the acoustic reference wave. Preferably, each cavity has an acoustic impedance different to the acoustic impedance of the body material of the body. Due to the different acoustic impedance, the acoustic reference wave can be reflected at each of the cavities, and thus be guided into the application area of the fluid channel.

According to a further preferred embodiment of the device, each cavity is a gas filled cavity or a vacuum cavity. Preferably, each cavity of the wave guide is filled with air. Air is considered an embodiment of the broad term gas. The body material of the body of the device is preferably not gaseous, but preferably of a solid material. Therefore, the body of solid material may have the at least one resting cavity placed in it. The wave guide formed by the at least one cavity can be arranged in a particularly compact manner in the body of the device. Thus, a particularly compact device can be achieved.

According to a further preferred embodiment of the device, the wave guide is formed by at least two cavities and a guiding section, which is formed by body material of the body, wherein the guiding section is arranged in between the cavities and configured to transmit the acoustic reference wave into the application region. As an effect, the acoustic wave will be reflected on each transition from body material to air, so that the acoustic wave remains in the guiding section formed by body material until it reaches the application region of the fluid channel. An acoustic reference wave entering the body material of the body of the device may thus be guided to the fluid channel application area with little attenuation loss. Preferably, a width of the guiding section is larger than the wavelength of the acoustic reference wave, such that the acoustic reference wave can be transmitted by the guiding section.

The wave guide may be configured, in particular by means of the at least two cavities and body material in between, to operate according to the principle of reflection and transmission of the acoustic wave. The cavities may each create a reflective boundary due to the difference between the acoustic impedance of the body material and the cavity. Such boundaries may reflect the acoustic reference wave and guide it to the application region of the fluid channel. The thickness of the guiding section between the cavities may be adjusted so that the acoustic reference wave can be transmitted.

According to a further preferred embodiment of the device, the guiding section comprises a conical shape tapering in direction of the application region of the fluid channel. This allows the intensity of the acoustic reference wave in the application area to be particularly high. Preferably, a diameter of the guiding section or a distance between the cavities is tapering in direction of the application region. The conical or tapered shape allows the acoustic reference wave to be collected from a wide area and directed into the application area in a concentrated manner. Thus, the conical shape of the guiding section may be formed to direct the acoustic wave into the application region. Preferably, the guiding section is formed as a guiding horn, in particular a micro-horn. Preferably, the guiding section is configured to collect the acoustic reference wave when entering the body or the body material of the body.

The wave guide and/or the wave condenser may be integrally formed in the body by femtosecond laser induced chemical etching (FLICE) or two-photon polymerization (2PP).

The ability of the FLICE techniques in creating complicated 3D structures in glass allows fabrication of the wave guide as 3D wave guide or the wave condenser as 3D wave condenser. Such an acoustic wave guide may be configured to guide the acoustic reference wave in any 3D directions towards the application region of the fluid channel.

Furthermore, the wave guide may be configured to guide the acoustic reference wave along a predefined path in the body of the device. The predefined path may be linear, curved or along a predefined arbitrary shaped trajectory. Thus, the acoustic reference wave entering the body material of the body may be guided in curved path by the wave guide to the application region of the fluid channel.

According to a preferred embodiment of the device, the wave guide may be formed as multifunctional microstructures. This may be achieved by structural modifications inside the wave guide, preferably without deteriorating the travelling guiding ability of the acoustic reference wave. This may introduce different energy domains. In an example, the wave guide may comprise narrow fluid channels inside (preferably formed via FLICE or 2PP techniques), wherein the inside channels allow introduction of further fluid to the application region. This further fluid could be of interest for applications such as drug delivery or cancer therapy investigations. It is also possible to integrate optical sub-wave guides inside the wave guide of the device. The sub-wave guides may be created by FLICE technique.

According to a further preferred embodiment of the device, the wave condenser is formed by at least one concave-shaped wall section of a channel wall for the fluid channel, wherein the at least one wall section at least partly forms the application region of the fluid channel. Each concave-shaped wall section increases the width of the fluid channel. The concave-shape of the wave condenser may support the technical effect of localizing the standing acoustic wave in the application region of the fluid channel. Each concave-shaped wall section is preferably configured to reflect at least a part of the acoustic reference wave entering the application region. Each concave-shaped wall section has an acoustical impedance to reflect the acoustic reference wave. Thus, the acoustic reference wave guided to the wave condenser via the wave guide may be at least partly transmitted through the channel wall into the application region of the fluid channel, where the transmitted acoustic reference wave is at least partly reflected on the inside surface of the concave-shaped wall section resulting in the standing acoustic wave. As a result, the wave condenser is preferably configured to localize the acoustic force field in the application region of the fluid channel. In an example, each concave-shaped wall section may be formed as a bowl. Each concave-shaped wall section may be of micro-size. At least two concave-shaped wall sections may be arranged opposite each other in the radial direction of the fluid channel, in particular in the application region of the fluid channel. The body material of the body of the device surrounding the wave condenser may be configured not to resonate with the acoustic reference wave.

According to a further preferred embodiment of the device, at least one edge is formed in a transition area from a linear wall section of the channel wall to the at least one concave-shaped wall section of the channel wall. Preferably, an edge is formed at each transition from a linear section of the channel wall to a concave shaped wall section of the channel wall. Each, concave shaped wall section projects outwardly rather than inwardly into the fluid channel such that the application region of the fluid channel is enlarged by each concave shaped wall section of the channel wall. Preferably, the fluid channel is formed upstream from the application region by a linear wall section of the channel wall. This linear wall section may be circular-cylindrical. Furthermore, it is preferably provided that the fluid channel downstream from the application region is formed by a further linear wall section of the channel wall. This linear wall section may also be circularly cylindrical. Each edge may cause a streaming in the application region of the fluid channel. The streaming may also refer to as circular streaming or spiral streaming. The streaming may be formed by fluid in the application region set into circulatory motion by the edge. As a result, the fluid may circulate in within the application region right next to the edge. The streams and/or the circulating fluid may cause (further) force pushing particles entering the application region towards the center of the application region. This further supports the bunching of the particles. As a result, both, the streaming and the standing acoustic wave support and/or cause the bunching of particles in the application region.

According to a further preferred embodiment of the device, the wave condenser is formed by two opposite arranged wall sections of the channel wall or a single ring-shaped wall section of the channel wall. For example, the wave condenser may be formed by two opposite arranged concave-shaped wall sections. Each concave-shaped wall section may have the form of a bowl. For example, the ring-shaped wall section can be formed by the radially outer half of a torus.

According to a further preferred embodiment of the device, the application region of the fluid channel is at least partly formed by the wave condenser such that a reference width of the application region perpendicular to a transport direction of the fluid channel matches a half wavelength of the reference wave with a tolerance of less than 10% of the half wavelength of the reference wave. The width of the application region is preferably the maximum width of the channel in the application region. Preferably, the reference width is measured in a direction perpendicular to the transport direction in the application region. When an acoustic reference wave enters the application region of the fluid channel, it is reflected from the opposite inner sides of the wave condenser. To generate the standing acoustic wave, it is advantageous if the reference width between the opposite inner sides of the wave condenser corresponds to half the wavelength of the acoustic reference wave. Often, the acoustic reference wave does not have exactly a single wavelength, but the acoustic reference wave has a predetermined wavelength spectrum. When the wavelength of the acoustic reference wave is referred to, this preferably means an average wavelength of the predetermined wavelength spectrum. Against this background, a standing acoustic wave can be achieved within the application region even if the reference width of the application region or the wave condenser does not exactly correspond to half the wavelength of the acoustic reference wave, but has a certain deviation. This deviation is preferably called tolerance and is preferably smaller than 10% or 5% of the half wavelength of the acoustic reference wave.

According to a further preferred embodiment of the device, the body is a monolithic body. Preferably, the body is made as a single piece. This allows a particularly compact design of the device.

According to a further preferred embodiment of the device, the body material of the body is based on glass, silicon, metal, diamond, sapphire or plastic. Preferably, the body material is glass, silicon, metal, diamond, sapphire, ceramic or plastic.

According to a second aspect of the invention, the problem mentioned at the introduction is solved by a system comprising the features of claim 11. The system comprises a first wave generator, which is configured to generate a first acoustic reference wave, a fluid pump for generating a flow of sample fluid, and a first device. The first device is formed by a device according to the first aspect of the invention and/or one of the related preferred embodiments. The advantageous explanations, preferred features, technical effects and/or advantages as explained in connection with the first aspect of the device and/or the related preferred embodiments are referred to in an analogous manner for the first device of the system. Furthermore, the fluid pump of the system is directly or indirectly coupled to the fluid channel of the first device for pumping the sample fluid through the fluid channel of the first device. The first wave generator is directly or indirectly coupled to the first device such that the first acoustic reference wave, generated by the first wave generator, is transmitted to the wave guide of the first device.

Preferably, the wave generator is connected to the body of the first device such that the first acoustic reference wave generated by the first wave generator is transmitted to the body material of the body of the first device. For transmitting the first acoustic reference wave from the first wave generator to the body material of the body, alternatively, another transmission element may be used that is arranged between the first wave generator and the body of the first device. In this case, the first wave generator is indirectly coupled to the first device. Nevertheless, a transmission of the first acoustic reference wave from the first wave generator to the body of the first device takes place.

According to a preferred example, the first wave generator is configured to generate an acoustic reference wave with a reference frequency of more than 7,5 MHz. Thus, the equivalent half wavelength of the acoustic reference wave is preferably less than 100 micrometers. However, the acoustic reference wave is not limited to the aforementioned frequency. In practice, the frequency of the acoustic reference wave may depend on the particular design of the device for the application. In particular, a higher frequency for the acoustic reference wave can be advantageous if particularly small particles, for example sub-micron particles, are to be examined.

Particles may be distributed in an initial concentration in the fluid that is pumped in by the fluid pump at an inlet end of the fluid channel. The pump causes a fluid flow of the fluid through the fluid channel, which transports the particles carried by the fluid into the application region. Particles entering the application region are exposed to the standing acoustic wave and the resulting force field, creating the bunch of particles within the application region. The standing wave is caused by the acoustic reference wave. Initially, the reference acoustic wave is generated by the first wave generator, then transmitted to the body of the first device and guided within the body by the wave guide to the application region. Within the application region, the acoustic reference wave is converted into the acoustic standing wave by the wave condenser.

By regularly switching on and off the first wave generator, a sequence of bunches of particles can be generated, which leave the application region one after the other and are further transported by the fluid flow in the transport direction downstream along the fluid channel.

The bunches of particles generated in the application region can subsequently be exposed to radiation to examine the structural composition of the particles. Due to the high concentration of particles within the bunch, these examinations can be carried out particularly efficiently.

According to a preferred embodiment of the system, the system comprises a second device. The second device is formed by another device according to the first aspect of the invention and/or one of the related preferred embodiments. The advantageous explanations, preferred features, technical effects and/or advantages as explained in connection with the first aspect of the device and/or the related preferred embodiments are referred to in an analogous manner for the second device of the system. Alternatively or additionally, the second device may be configured analogously to the first device. The fluid channel of the first device and the fluid channel of the second device are connected in series, such that the fluid channel of the second device is downstream to the fluid channel of the first device.

The first device and the second device may be formed in an integral manner, so that the two devices are formed as a single device. This single-piece device may thus be formed in a first section by the first device and in a further, second section by the second device.

However, it is also possible, that the first device and the second device are each formed as separate devices. Preferably, the two devices are connected in series such that the fluid channel of the first device and the fluid channel of the second device each form part of an uninterrupted fluid channel. In particular, it is possible for the second device to be coupled directly downstream of the first device such that the uninterrupted fluid channel is formed exclusively by the fluid channel of the first device and the fluid channel of the second device. However, it is also possible that another device is arranged between the two devices with an associated fluid channel connecting the two fluid channels of the first and second devices.

As a result of the direct or indirect series connection of the fluid channels of the first and second devices, the system comprises at least two application regions located along the common channel (that is, in series) so as to successively improve the bunching. This might be of advantage at high flow rates and high bunching rates when there might not be enough time during one cycle to create a narrow bunch. The application regions could be located in a single integrated body forming both devices, or each in its own device (first and second device, respectively) with the fluid channels connected by capillaries, for example. The spacing of the application regions may be determined by the flow speed and the bunching period. Given that the period may be determined by the application, one would need to set the flow speed to ensure synchronization (that the bunching action in the application region of the fluid channel of the second device occurs when the bunch released form the application region of the fluid channel of the first device arrives).

According to a further preferred embodiment of the system, the system comprises a control unit. The control unit is configured to control the first wave generator such that the first wave generator generates the first reference wave in a first pattern with alternating on-periods and off-periods resulting in a new first bunch of sample particles in the application region of the fluid channel of the first device during each on-period of the first pattern. As a result, a new bunch of particles is created in the application region of the fluid channel of the first device.

As will become apparent from the explanation of one of the following preferred embodiments of the system, a newly created bunch of particles may be exposed to radiation while still within the application region to examine the structural constitution of the particles of the bunch. Alternatively, however, it is also possible for a newly created bunch of particles to be released at the end of the corresponding on-period from the application region resulting in a sequence of bunches carried by the flow of fluid downstream of the application region of the first device. The bunches of particles carried downstream by the fluid may be exposed to radiation downstream to perform the appropriate examination of the particles.

Before the bunches created by the first device are exposed to radiation, it is possible that the particles are further concentrated within the respective bunch. For this purpose, the second device already explained may be used, which can be coupled in series with the first device.

According to a further preferred embodiment of the system, the system comprises a second wave generator, which is configured to generate a second acoustic reference wave. The second wave generator is directly or indirectly coupled to the second device such that the second acoustic reference wave, generated by the second wave generator, is transmitted to the wave guide of the second device. The advantageous explanations, preferred features, technical effects and/or advantages as explained in connection with the first wave generator and the first device and/or the related preferred embodiments are referred to in an analogous manner for the second wave generator and the second device, respectively.

According to a further preferred embodiment of the system, the control unit is configured to control the second wave generator such that the second wave generator generates the second reference wave in a second pattern with alternating on-periods and off-periods. Preferably, the control unit is configured to control the first and second wave generators, such that the second pattern is synchronized with the first pattern and/or such that the particles are further concentrated in the bunches that sequentially enter the application region of the fluid channel of the second device.

According to a further preferred embodiment of the system, the system comprises a radiation generator and a radiation detector. The radiation generator is arranged such that the application region of the fluid channel of the first or second device is exposed to radiation generated by the radiation generator resulting in modified radiation, and wherein the radiation detector is arranged to detect the modified radiation. The radiation preferably refers to X-ray radiation or IR radiation. The radiation may also refer to visible light or to UV light. Similar configurations apply for the generator and the detector. For instance, the radiation generator is preferably configured as an X-ray generator and the radiation detector is preferably configured as an X-ray detector.

As explained in connection with the device, the wave guide of the first and/or second device may be configured to guide the acoustic reference wave along a predefined path in the body of the respective device. The predefined path may be linear, curved or along a predefined arbitrary shaped trajectory. Thus, the acoustic reference wave entering the body material of the body of the respective device may be guided in curved path by the wave guide to the application region of the fluid channel of the respective device. As an effect, the first and/or second wave generator may be arranged at a side region of the body of the respective device, wherein the radiation generator is arranged below the application region of the fluid channel of the respective device and the detector may be arranged above this application region, such that the application region is exposed to the radiation generated by the radiation generator. The preferred arrangement of the radiation generator below the application region and of the radiation detector above the application region offers the advantage that the radiation generated by the radiation generator is directed to the bunch within the application region where the particles within the bunch have the highest concentration. This is especially valid if the radiation generator is located below the application region of the fluid channel of the second device and the radiation detector is located above said application region.

Further features, advantages and application possibilities of the present invention may be derived from the following description of exemplary embodiments and/or the figures.

Furthermore, in the figures, same reference signs may indicate same or similar objects.
- Fig. 1: schematically illustrates a first embodiment of the device and a first embodiment of the system.
- Fig. 2: schematically illustrates a second embodiment of the device.
- Fig. 3: schematically illustrates a third embodiment of the device.
- Fig. 4: schematically illustrates a part of the second embodiment of the device in a perspective view.
- Fig. 5: schematically illustrates a second embodiment of the system.

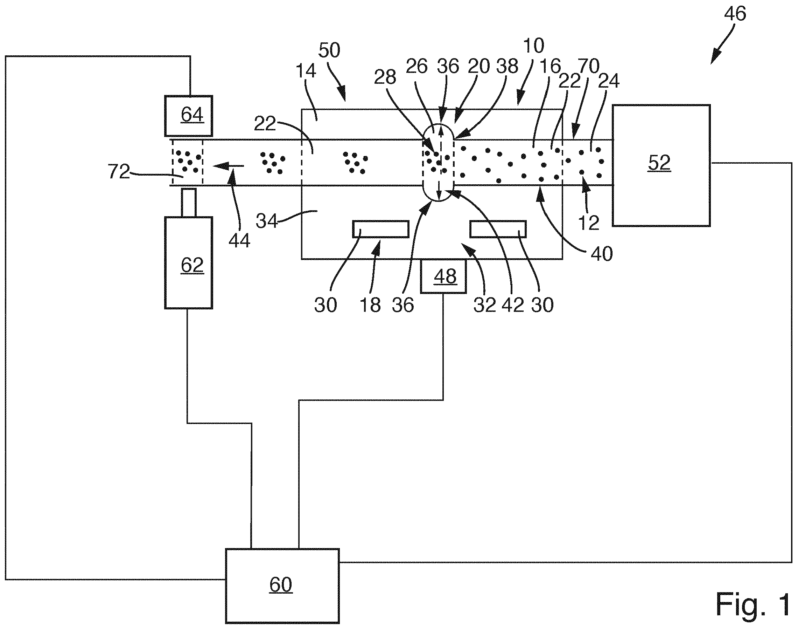

Figure 1 schematically illustrates a preferred embodiment of the device 10. The device 10 is preferably a part of the system 46 also schematically shown in Figure 1. The following explanations in connection with the device 10 may therefore refer to the system 46 with the device 10 or to the device 10 alone.

The device 10 is used to bunch particles 12 within an application region 26, such that the bunched particles 12 form a bunch 28 of particles 12. The bunch 28 may also be referred to as the first bunch 28. Bunching the particles 12 in a bunch 28 provides the advantage that this bunch 28 can be exposed to radiation, in particular X-rays, to examine the structural constitution of the particles 12 of the bunch 28. Due to the increased concentration of particles 12 within the bunch 28, there is a high probability that a large portion of the radiation will be modified upon impingement on the particles 12 of the bunch 28, such that the resulting modified radiation represents the information regarding the structural composition of the particles 12 of the bunch 28.

To achieve the bunching of particles 12, the device 10 includes a body 14, a fluid channel 16, an acoustic wave guide 18, and an acoustic wave condenser 20.

The body 14 of the device 10 may also be referred to as the base body 14. The body 14 may be formed in one part or in multiple parts. Preferably, the body 14 is made of glass, silicon, metal, diamond, sapphire, ceramic or plastic. Accordingly, the same applies to the body material 34 of the body 14. Where the body 14 is formed of multiple parts, the parts may be formed of different materials, preferably each based on a material from the aforementioned selection of materials.

The fluid channel 16 of the device 10 extends through the body 14, and it can therefore also be referred to that the fluid channel 16 is embedded in the body 14 of the device 10. It has been found to be particularly advantageous if the fluid channel 16 is integrally formed by the body 14. As schematically shown in Figure 1, it may preferably be provided that a channel wall of the fluid channel 16 is integrally formed by the body 14 and/or the body material 34 of the body 14.

The fluid channel 16 defines a fluid path 22 along which a fluid 24 is routed through the fluid channel 16 in the transport direction 44. The system 46 shown in Figure 1 further includes a fluid pump 52 indirectly coupled to the fluid channel 16 of the device 10. The fluid pump 52 is configured to pump the fluid 24, in which the particles 12 are distributed, into the fluid channel 16 of the device 10 at an input end thereof. The fluid 24, which enters the fluid channel 16 by means of the pump 52, has an initial concentration of particles 12. In principle, the particles 12 distributed in the fluid 24 could already be exposed to radiation, in particular X-rays, in a section upstream of the device 10 in order to examine the structural composition of the particles 12. However, this gives rise to the disadvantages mentioned in the introduction, such as low efficiency. Obtaining knowledge about the structural composition of the particles 12 can be made much more efficient by means of radiation if the particles 12 are arranged in a higher concentration, as in the bunch 28 of particles 12.

Therefore, the device 10 is based on the idea of significantly increasing the concentration of particles 12 in the fluid 24 in an application region 26 within the device 10 to create bunches 28 of particles 12 in the fluid 24, such that more efficient investigation of the structural composition of the particles 12 is enabled. To achieve the increased concentration of particles 12 in a bunch 28, the device 10 includes the acoustic wave guide 18 and the acoustic wave condenser 20.

The acoustic wave guide 18 may also be referred to as the wave guide 18. The acoustic wave guide 18 is configured to direct an acoustic reference wave within the body 14, which acoustic reference wave is preferably generated by the first wave generator 48 of the system 46. For this purpose, the wave generator 48 may be directly or indirectly connected to the body 14 such that the reference acoustic wave generated by the wave generator 48 is transported by the body material 34 of the body 14. The wave guide 18 directs the reference acoustic wave within the body 14 to the application region 26 of the fluid channel 16, such that the reference acoustic wave enters the application region 26 of the fluid channel 16.

It had been found to be particularly advantageous if the wave guide 18 is integrated into the body 14 and/or formed by the body 14. As can be seen schematically from Figure 1, it is preferably provided that the wave guide 18 comprises, for example, two cavities 30 within the body 14. Preferably, the two cavities 30 of the wave guide 18 are spaced apart from each other such that a guiding section 32 is formed between the two cavities 30. The guiding section 32 may also be referred to as the guide section 32. This guiding section 32 may be formed by the body material 34 of the body 14. The two cavities 30 may each be formed as vacuum cavities 30. However, it is also possible that each cavity 30 is filled with a gas, in particular air. At the transition from the body material 34 of the body 14 to each of the two cavities 30, a step in the acoustic impedance occurs. If the acoustic reference wave is preferably transmitted to the body 14 by means of the first wave generator 48 of the system 46, the acoustic reference wave is further transmitted by the body material 34 of the body 14 and/or at least partially reflected at the aforementioned cavities 30 due to the step in the acoustic impedance. As a result, the acoustic reference wave is at least partially held in the guiding section 32 between the cavities 30 and thereby directed into the application region 26 of the fluid channel 16. Preferably, the guiding section 32 of the wave guide 18 is aligned with the application region 26 along a direction perpendicular to the transport direction 44.

Preferably, the wave condenser 20 of the device 10 is formed by the body 14 and/or is formed as an integral part of the body 14. As can be seen schematically from Figure 1, the wave condenser 20 is formed, for example, by two oppositely disposed concave channel wall sections 36 of a channel wall of the fluid channel 16. The channel wall of the fluid channel is preferably integrally formed by the body 14. Thus, each of the two concave channel wall sections 36 may also be integrally formed through the body 14. A maximum distance and/or channel diameter between the two oppositely disposed concave channel wall sections 36 is also referred to as a reference width 42. The two oppositely disposed concave channel wall sections 36 expand the channel diameter in the application region 26. Preferably, the reference width 42 is larger than the diameter of the fluid channel 16 in a linear wall section 40 upstream and/or downstream of the application region 26 of the fluid channel 16. Preferably, the wave condenser 20 and/or the associated concave channel wall sections 36 are formed such that the reference width 42 corresponds to a half wavelength of the acoustic reference wave. Preferably, the reference width 42 can deviate from half the wavelength of the acoustic reference wave by a maximum of 10% or a maximum of 5%. By having the reference width 42 at least substantially equal to half the wavelength of the reference acoustic wave, a standing acoustic wave in the application region 26 is generated from the reference acoustic wave by means of the wave condenser 20. This standing acoustic wave in the application region 26 causes an acoustic force field in the application region 26 that acts on particles 12 as they enter the application region 26, pushing and/or concentrating these particles 12 into a bunch 28 of particles 12 within the application region 26. In other words, the wave condenser 20 is adapted to cause a standing acoustic wave based on the reference acoustic wave as it enters the application region 26, which in turn causes a force field to push the particles 12 together into a bunch 28 within the application region 26. The force field also causes the particles 12 entering the application region 26 to be held in the application region 26 against the flow of the fluid 24.

The shape of the acoustic wave condenser 20 is preferably configured such that the standing acoustic wave generated in the application region 26 remains localized and/or retained in the application region 26. This ensures a particularly effective bunching of the particles 12 in the application region 26.

The bunching of the particles 12 in the application region 26 can be intensified and/or improved by an additional effect. To achieve this effect, an edge 38 is preferably formed in at least one transition region from a linear wall section 40 of the channel wall to the at least one concave shaped wall section 36 of the channel wall. As can be seen schematically from Figure 1, such an edge 38 is formed, for example, in the transition region from the linear wall section 40 of the channel wall located upstream of the application region 26 to each concave shaped wall section 36. When fluid 24 flows in the transport direction 44 through the fluid channel 16 from a region that is upstream of the application region 26 into the application region 26, the fluid is directed past each edge 38, resulting in a spiral and/or circular motion of the fluid 24 in the application region 26 in the transport direction 44 immediately downstream of the edge 38. A similar effect may be created at the at least one edge 38, which may be formed in the transition region from the at least one concave-shaped wall section 36 to the downstream linear wall section 40 of the channel wall. Preferably, each of the aforementioned edges 38 may cause a spiral or circular motion of the fluid 24 within the application region 26, said motion forcing particles 12 into the center of the application region 26. Said movement thus helps to concentrate particles 12 into the bunch 28 within application region 26. This technical effect may exist superimposed on the bunching effect of particles 12 by the standing acoustic wave. Thus, both the spiral or circular motion of the fluid 24 within the application region 26 and the standing acoustic wave may result in the creation of a bunch 28 of particles 12 within the application region 26.

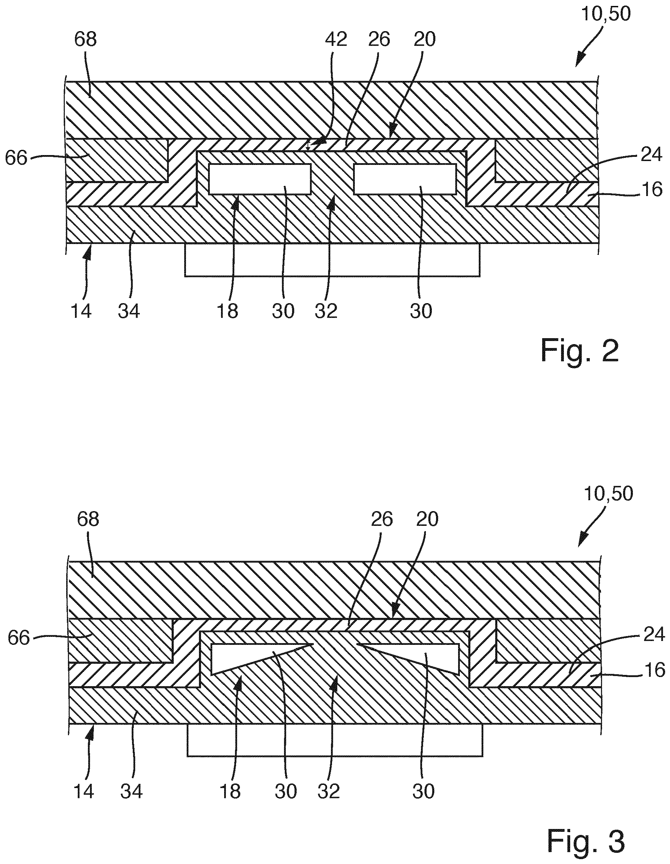

A further preferred embodiment of the device 10 is schematically shown in Figure 2. As can be seen from Figure 2, it may be provided that the reference width 42 in the application region 26 is smaller than the average diameter of the fluid channel 16 upstream and/or downstream of the application region 26. Preferably, the reference width 42 is configured such that an acoustic reference wave, for example generated by the first wave generator 48 and transmitted to the body 14 of the device 10, results in a standing acoustic wave within the application region 26. For example, the larger or smaller diameter of the fluid channel 16 upstream and/or downstream of the application region 26 may be adapted to prevent a standing acoustic wave from being generated in these regions of the fluid channel 16, even if a portion of the reference acoustic wave enters one of said regions of the fluid channel 16 (downstream and/or upstream of the application region 26).

In the preferred embodiment of the device 10, as exemplified schematically in Figure 2, the body 14 of the device 10 is formed in multiple parts. The body 14 comprises a bottom part 66 and a top part 68 arranged on the bottom part 66. The fluid channel 16 is formed, at least partly, between the bottom part 66 and the top part 68. Thus, it is preferably provided that the application region 26 of the fluid channel 16 is formed exclusively in a region directly between the bottom part 66 and the top part 68. The remaining region of the fluid channel 16 may, for example, be exclusively integrated and/or embedded in the bottom part 66 of the body 14. The material of the top part 68 may be different from the material of the bottom part 66. In principle, however, it is also possible that the bottom part 66 and the top part 68 are formed of the same material. Preferably, the wave guide 18 is exclusively embedded and/or integrated in the bottom part 66 of the body 14. As a result, the structural design of the top part 68 may be particularly simple. For example, the top part 68 may be formed by a glass plate. For example, the bottom part 66 may be formed of glass, silicone, metal, diamond, sapphire, ceramic or plastic. Preferably, the bottom part 66 is formed in one piece. The top part 68 may also be formed in one piece. In this case, the body 14 consists of exactly two parts.

As can be seen schematically from Figure 2, it is preferred if the wave guide 18 has two cavities 30 which are arranged at a distance from one another and are each rectangular in cross-section. Each of the two cavities 30 may be formed as a closed cavity 30. However, it is also possible that each of the two cavities 30 is formed to be open to the surroundings. Preferably, the distance between the two cavities 30 is configured such that no standing acoustic wave can be formed between the two cavities 30. Preferably, the distance between the two cavities 30 is greater than half the wavelength of the acoustic reference wave or greater than the entire wavelength of the acoustic reference wave.

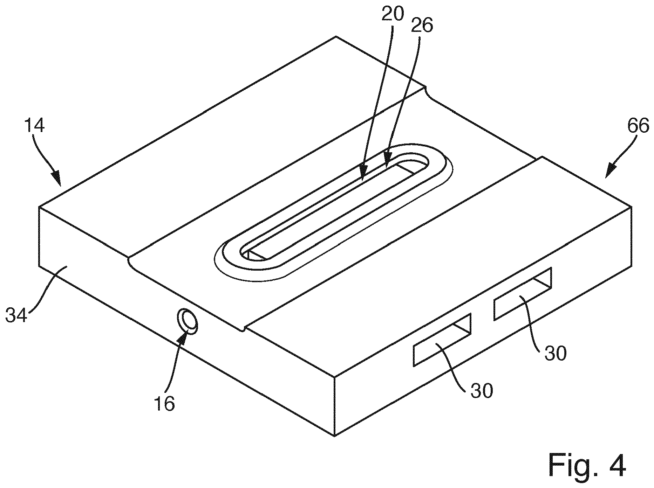

In Figure 4, the bottom part 66 of the device 10 of Figure 2 is shown schematically.

Figure 3 shows a further preferred embodiment of the device 10. This device 10 corresponds at least substantially to the device as shown in Figure 2. The associated advantageous explanations, preferred features, effects and/or advantages as explained in connection with Figure 2 are therefore referred to in an analogous manner for the device 10 of Figure 3.

The device 10 of Figure 3 differs from the device 10 of Figure 2 in particular by the geometric shape of the cavities 30. As can be seen from Figure 3, it is preferably provided that the cavities 30 are shaped in cross-section such that the guide section 32 between the cavities 30 is chronically convergent towards the application region 26. In other words, the cross-section of the cavities 30 may be shaped such that the guide section 32 reduces in size in the direction of the application region 26. Thus, an at least substantially conical shape for the guiding section 32 can be achieved. The conical shape of the guiding section 32 ensures that the intensity of the acoustic reference wave when it enters the application region 26 is particularly high.

As has been previously explained in connection with Figure 1, the device 10 may form a part of the system 46, such as is also illustrated in Figure 1. In addition, the system 46 preferably includes the pump 52 and the first wave generator 48. Preferably, the first wave generator 48 is directly connected to the body 14 of the device 10 such that a reference acoustic wave generated by the first wave generator 48 is transmitted directly to the body 14 such that the reference acoustic wave propagates within the body material 34 of the body 14. When the acoustic reference wave reaches the region of the wave guide 18, at least a portion of this acoustic reference wave is directed into the application region 26 by the wave guide 18. The pump 52 may be coupled to the fluid channel 16 of the device 10 by means of a connector 70, such that the pump 52 may pump the fluid 24 into the fluid channel 16 in the transport direction 44 via the connector 70. The connector 70 may be formed by a hose or a tube, for example. However, it is also possible for the pump 52 to be directly coupled to the fluid channel 16 of the device (not shown in Figure 1).

It was found to be particularly advantageous if the system 46 further comprises a control unit 60 configured to control the first wave generator 48. For example, the control unit 60 may be configured to control the first wave generator 48 such that the first wave generator 48 generates the acoustic reference wave in a first pattern of alternating on-periods and off-periods. During each new on-period, a new bunch of particles 12 is generated in the application region 26 of the fluid channel 16 of the device 10. During each subsequent off-period, the generated bunch 28 of particles 12 is released, captured by the flow of fluid 24, and transported in the transport direction 44.

In addition, it has been found to be particularly advantageous if the system 46 further comprises a radiation generator 62 and a radiation detector 64. The radiation generator 62 is configured to generate radiation. The radiation may be, for example, X-rays or infrared radiation. The radiation may also be visible light or UV light. Accordingly, it is preferred if the radiation generator 62 is configured as an X-ray radiation generator 62 or an infrared radiation generator 62. In the foregoing embodiment of the system 46 as schematically shown in Figure 1, the radiation generator 62 is arranged such that the flow of fluid 24 arrives downstream to an application area 72, and that the radiation generator 62 is arranged such that the application area 72 is exposed to radiation generated by the radiation generator 62. When a bunch 28 of particles 12 enters the application area 72, the radiation generated by the radiation generator 62 is modified when it impinges on the particles 12 of the bunch 28, thus resulting in modified radiation. Furthermore, the radiation detector 64 is preferably arranged such that the radiation detector 64 can detect the modified radiation. Thus, the radiation generator 62 and the radiation detector 64 may be arranged on opposite sides to the application area 72.

As can be seen schematically from Figure 1, it is possible for the application area 72 to be arranged outside the fluid channel 16 of the device 10. However, it is also possible that the application area 72 is formed by a portion of the fluid channel 16. For example, the application area 72 may be formed in a section of the fluid channel 16 downstream of the application region 26. Further, it is possible that the application area 72 is disposed in and/or coincides with the application region 26. In this case, it is possible that the particles 12 of a bunch 28 generated in the application region 26 are exposed to the radiation generated by the radiation generator 62, resulting in the modified radiation that can be detected by the radiation detector 64. In this case, the radiation generator 62 and the radiation detector 64 may be arranged on opposite outer sides in a direction perpendicular to the transport direction 44 in alignment with the application region 26.

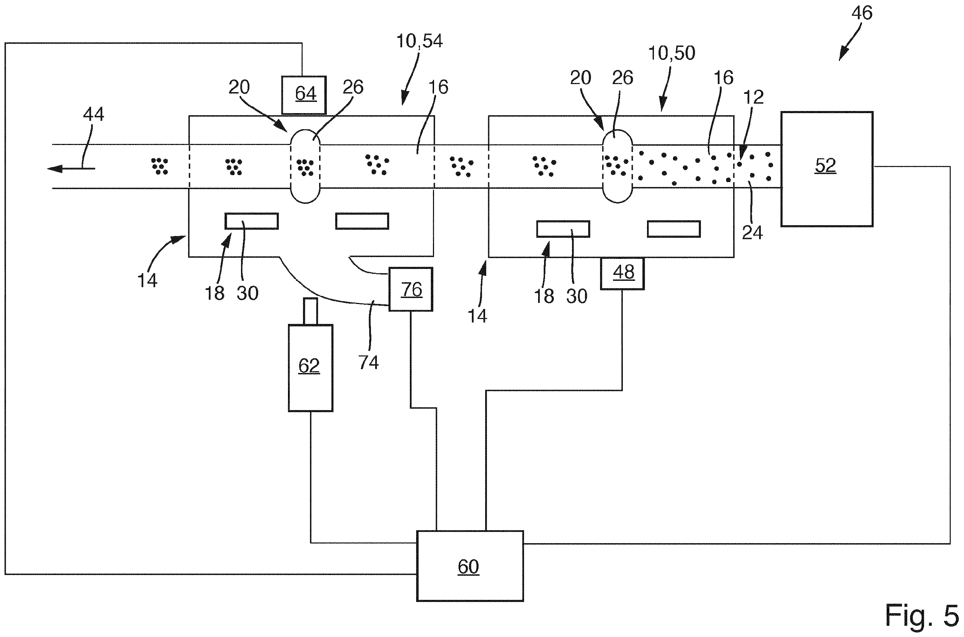

Another preliminary embodiment of the system 46 is shown schematically in Figure 5. For the system 46 of Figure 5, reference is made in an analogous manner to the previous advantageous explanations, preferred features, effects and or advantages as discussed in connection with the system 46 of Figure 1. In the embodiment of the system 46 of Figure 5, the device 10 of the system 46 of Figure 1 forms the first device 50 of the system 46. The system 46 of Figure 5 further comprises a second device 54. Both devices 50, 54 may be at least substantially the same. For each of the two devices 50, 54, reference is therefore made to the advantageous explanations, preferred features, effects and or advantages as previously explained for the device 10 in connection with Figures 1-4.

Preferably, the first device 50 and the second device 54 are connected in series such that the fluid channel 16 of the first device 50 is coupled downstream to the fluid channel 16 of the second device 54. In principle, however, it is also possible that the fluid channel 16 of the first device 50 is connected to the fluid channel 16 of the second device 54 by a (further) connector. This is shown purely by way of example in Figure 5.

However, if the first device 50 is directly coupled to the second device 54, a particularly compact design of the system 46 can be achieved. A further advantageous embodiment (not shown) is characterized in that the first device 50 and the second device 54 are at least partially integrally formed with each other or are formed by two portions of a common device.

By arranging the second device 54 downstream of the first device 50, the flow of the fluid 24 is directed through two application regions 26 arranged one behind the other, namely first through the application region 26 of the first device 50 and then through the application region 26 of the second device 54. Therefore, it can also be referred to that the fluid channel 16 of the first device 50 and the fluid channel 16 of the second device 54 form a common fluid channel of the system 46. In the application region 26 of the first device 50, the particles 12 are concentrated into a bunch 28. When this bunch 28 of particles 12 is released in the out-period and caught by the flow of fluid 24, the fluid 24 carries the bunch 28 of particles 12 into the application region 26 of the second device 54. A standing wave is also created in this application region 26 of the second device 54 during the associated on-period, such that the resulting force field further concentrates the particles 12 of the bunch 28 when this bunch 28 has previously entered the application region 26 of the second device 54.

Figure 5 further illustrates a preferred arrangement of the radiation generator 62 in which the application area 72 overlaps with the application region 26 of the second device 54, or the application area 72 is formed by the application region 26 of the second device 54. Therefore, the radiation generator 62 is arranged such that the application area 72 or the application region 26 of the second device 54 is exposed to radiation generated by the radiation generator 62. Thus, the bunch 28 of particles 12 further concentrated by the second device 54 is also exposed to the radiation generated by the radiation generator 72, resulting in modified radiation that is detected by the radiation detector 64.

The body 14 of the second device 54 may include a neck section 74, wherein a second wave generator 76 is disposed at the end of the neck section 74. The second wave generator 76 may form part of the system 46. The neck section 74 may direct the reference acoustic wave generated by the second wave generator 76 to the wave guide 18 of the second device 54, such that the wave guide 18 of the second device 54 directs the reference acoustic wave into the application region 26 of the fluid channel 16 of the second device 54. The wave condenser 20 of the second device 54 then generates a standing acoustic wave in the application region 26 of the second device 54 based on the reference acoustic wave. The neck section 74 further provides the advantage that the radiation generator 62 and the radiation detector 64 may be disposed on opposite sides of the application region 26 of the second device 54, without the radiation generated by the radiation generator 62 being disturbed by the second wave generator 76.

By further concentrating the particles 12 of the bunch 28 in the application region 26 of the second device 54, an even more efficient examination of the structural composition of the particles 12 can be performed using the modified radiation detected by the radiation detector 64.

It is additionally pointed out that "comprising" does not rule out other elements, and "a" or "an" does not rule out a multiplicity. It is also pointed out that features that have been described with reference to one of the above exemplary embodiments may also be disclosed as in combination with other features of other exemplary embodiments described above. Reference signs in the claims are not to be regarded as restrictive.

### REFERENCE SIGNS

- 10: Device
- 12: sample particle
- 14: body
- 16: fluid channel
- 18: wave guide
- 20: wave condenser
- 22: fluid path
- 24: fluid
- 26: application region
- 28: first bunch
- 30: cavity
- 32: guiding section
- 34: body material
- 36: concave-shaped wall section
- 38: edge
- 40: linear wall section
- 42: reference width
- 44: transport direction
- 46: system
- 48: first wave generator
- 50: first device
- 52: fluid pump
- 54: second device
- 60: control unit
- 62: radiation generator
- 64: radiation detector
- 66: bottom part
- 68: top part
- 70: connector
- 72: application area
- 74: neck section
- 76: second wave generator

## Claims

1. Device (10) for bunching sample particles (12), the device (10) comprising
a body (14), being formed as a chip, from a body material (34) being a chip material,
a fluid channel (16) extending through the body (14), wherein the fluid channel (16) is formed by the body (14),
an acoustic wave guide (18) embedded in the body (14), and
an acoustic wave condenser (20) embedded in the body (14),
wherein the fluid channel (16) forms a fluid path (22) through the body (14), such that the fluid channel (16) is configured to guide a flow of a sample fluid (24), in which sample particles (12) are distributed, through the fluid channel (16) along the fluid path (22),
wherein the wave guide (18) is configured to guide an acoustic reference wave, when transmitted via the body (14) to the wave guide (18), to an application region (26) of the fluid channel (16),
wherein the wave condenser (20) at least partly forms the application region (26) of the fluid channel (16), and
wherein the wave condenser (20) is configured to generate a standing acoustic wave in the application region (26) from the reference wave when the wave guide (18) guides the reference wave into the application region (26) resulting in an acoustic force field in the application region (26), which pushes sample particles (12) when entering the application region (26) into at least one bunch of sample particles (12) in the application region (26);
**characterized in that** the wave guide (18) is formed by the body (14) and at least one cavity (30) in the body (14).

2. Device (10) according to the preceding claim, wherein each cavity (30) is a gas filled cavity (30) or a vacuum cavity (30).

3. Device (10) according to any of the preceding claims, wherein the wave guide (18) is formed by at least two cavities (30) and a guiding section (32), which is formed by body material (34) of the body (14), wherein the guiding section (32) is arranged in between the cavities (30) and configured to transmit the acoustic reference wave into the application region (26).

4. Device (10) according to the preceding claim, wherein the guiding section (32) comprises a conical shape tapering in direction of the application region (26) of the fluid channel (16).

5. Device (10) according to the preceding claim, wherein the wave condenser (20) is formed by at least one concave-shaped wall section (36) of a channel wall for the fluid channel (16), wherein the at least one wall section at least partly forms the application region (26) of the fluid channel (16).

6. Device (10) according to the preceding claim, wherein at least one edge (38) is formed in a transition area from a linear wall section (40) of the channel wall to the at least one concave-shaped wall section (36) of the channel wall.

7. Device (10) according to the preceding claim, wherein the wave condenser (20) is formed by two opposite arranged wall sections of the channel wall or a single ring-shaped wall section of the channel wall.

8. Device (10) according to any of the preceding claims 5 to 6, wherein the application region (26) of the fluid channel (16) is at least partly formed by the wave condenser (20) such that a reference width (42) of the application region (26) perpendicular to a transport direction (44) of the fluid channel (16) matches a half wavelength of the reference wave with a tolerance of less than 10% of the half wavelength of the reference wave.

9. Device (10) according to any of the preceding claims, wherein the body (14) is a monolithic body.

10. Device (10) according to any of the preceding claims, wherein the body material (34) of the body (14) is based on glass, silicon, metal, diamond, sapphire, ceramic or plastic.

11. System (46), comprising
a first wave generator (48) configured to generate a first acoustic reference wave,
a first device (50) formed by a device according to any of the preceding claims, and
a fluid pump (52) for generating a flow of sample fluid (24),
wherein the fluid pump (52) is directly or indirectly coupled to the fluid channel of the first device (56) for pumping the sample fluid (24) through the fluid channel of the first device (56), and
wherein the first wave generator (48) is directly or indirectly coupled to the first device (50) such that the first acoustic reference wave, generated by the first wave generator (48), is transmitted to the wave guide (18) of the first device (50).

12. System (46) according to the preceding claim, wherein the system (46) comprises a second device (54) formed by a further device according to any of the preceding claims, wherein the fluid channel of the first device (50) and the fluid channel of the second device (54) are connected in series, such that the fluid channel of the second device (54) is downstream to the fluid channel of the first device (50).

13. System (46) according to any of the preceding claim 11 to 12,
wherein the system (46) comprises a control unit (60), and
wherein the control unit (60) is configured to control the first wave generator (48), such that the first wave generator (48) generates the first reference wave in a first pattern with alternating on-periods and off-periods resulting in a new first bunch (28) of sample particles (12) in the application region (26) of the fluid channel of the first device (50) during each on-period of the first pattern.

14. System (46) according to any of the preceding claims 11 to 13,
wherein the system (46) further comprises a radiation generator (62) and a radiation detector (64),
wherein the radiation generator (62) is arranged such that the application region (26) of the fluid channel of the first or second device (50, 55) is exposed to radiation generated by the radiation generator (62) resulting in modified radiation, and
wherein the radiation detector (64) is arranged to detect the modified radiation.

## Patentansprüche

1. Vorrichtung (10) zum Bündeln von Probenpartikel (12), wobei die Vorrichtung (10) umfasst
einen als Chip ausgebildeten Körper (14) aus einem Körpermaterial (34), das ein Chipmaterial ist,
einen Fluidkanal (16), der sich durch den Körper (14) erstreckt, wobei der Fluidkanal (16) durch den Körper (14) gebildet wird,
einen in den Körper (14) eingebetteten akustischen Wellenleiter (18) und
einen in den Körper (14) eingebetteten akustischen Wellenkondensator (20),
wobei der Fluidkanal (16) einen Fluidweg (22) durch den Körper (14) bildet, so dass der Fluidkanal (16) so konfiguriert ist, dass er einen Strom eines Probenfluids (24), in dem Probenpartikel (12) verteilt sind, durch den Fluidkanal (16) entlang des Fluidwegs (22) leitet,
wobei der Wellenleiter (18) so konfiguriert ist, dass er eine akustische Referenzwelle, die über den Körper (14) zum Wellenleiter (18) übertragen wird, zu einem Anwendungsbereich (26) des Fluidkanals (16) leitet,
wobei der Wellenkondensator (20) zumindest teilweise den Anwendungsbereich (26) des Fluidkanals (16) bildet, und
wobei der Wellenkondensator (20) so konfiguriert ist, dass er aus der Referenzwelle eine stehende akustische Welle in dem Anwendungsbereich (26) erzeugt, wenn der Wellenleiter (18) die Referenzwelle in den Anwendungsbereich (26) leitet, was zu einem akustischen Kraftfeld in dem Anwendungsbereich (26) führt, das Probenpartikel (12) beim Eintritt in den Anwendungsbereich (26) in mindestens ein Bündel von Probenpartikeln (12) in dem Anwendungsbereich (26) drückt;
**dadurch gekennzeichnet, dass** der Wellenleiter (18) von dem Körper (14) und mindestens einem Hohlraum (30) in dem Körper (14) gebildet wird.

2. Vorrichtung (10) nach dem vorhergehenden Anspruch, wobei jeder Hohlraum (30) ein gasgefüllter Hohlraum (30) oder ein Vakuumhohlraum (30) ist.

3. Vorrichtung (10) nach einem der vorhergehenden Ansprüche, wobei der Wellenleiter (18) durch mindestens zwei Hohlräume (30) und einen Führungsabschnitt (32) gebildet ist, der durch Körpermaterial (34) des Körpers (14) gebildet ist, wobei der Führungsabschnitt (32) zwischen den Hohlräumen (30) angeordnet und zur Übertragung der akustischen Referenzwelle in den Anwendungsbereich (26) ausgebildet ist.

4. Vorrichtung (10) nach dem vorhergehenden Anspruch, wobei der Führungsabschnitt (32) eine sich in Richtung des Applikationsbereichs (26) des Fluidkanals (16) verjüngende konische Form aufweist.

5. Vorrichtung (10) nach dem vorhergehenden Anspruch, wobei der Wellenkondensator (20) durch mindestens einen konkav geformten Wandabschnitt (36) einer Kanalwand für den Fluidkanal (16) gebildet ist, wobei der mindestens eine Wandabschnitt zumindest teilweise den Applikationsbereich (26) des Fluidkanals (16) bildet.

6. Vorrichtung (10) nach dem vorhergehenden Anspruch, wobei mindestens eine Kante (38) in einem Übergangsbereich von einem geradlinigen Wandabschnitt (40) der Kanalwand zu dem mindestens einen konkav geformten Wandabschnitt (36) der Kanalwand ausgebildet ist.

7. Vorrichtung (10) nach dem vorhergehenden Anspruch, wobei der Wellenkondensator (20) durch zwei gegenüberliegend angeordnete Wandabschnitte der Kanalwand oder einen einzigen ringförmigen Wandabschnitt der Kanalwand gebildet ist.

8. Vorrichtung (10) nach einem der vorhergehenden Ansprüche 5 bis 6, wobei der Applikationsbereich (26) des Fluidkanals (16) zumindest teilweise durch den Wellenkondensator (20) derart gebildet ist, dass eine Referenzbreite (42) des Applikationsbereichs (26) senkrecht zu einer Transportrichtung (44) des Fluidkanals (16) mit einer halben Wellenlänge der Referenzwelle mit einer Toleranz von weniger als 10% der halben Wellenlänge der Referenzwelle übereinstimmt.

9. Vorrichtung (10) nach einem der vorhergehenden Ansprüche, wobei der Körper (14) ein monolithischer Körper ist.

10. Vorrichtung (10) nach einem der vorhergehenden Ansprüche, wobei das Körpermaterial (34) des Körpers (14) auf Glas, Silizium, Metall, Diamant, Saphir, Keramik oder Kunststoff basiert.

11. System (46), aufweisend
einen ersten Wellengenerator (48), der so konfiguriert ist, um eine erste akustische Referenzwelle zu erzeugen,
eine erste Vorrichtung (50), die durch eine Vorrichtung nach einem der vorangehenden Ansprüche gebildet ist, und
eine Fluidpumpe (52) zur Erzeugung eines Stroms von Probenfluid (24),
wobei die Fluidpumpe (52) direkt oder indirekt mit dem Fluidkanal der ersten Vorrichtung (56) verbunden ist, um das Probenfluid (24) durch den Fluidkanal der ersten Vorrichtung (56) zu pumpen, und
wobei der erste Wellengenerator (48) direkt oder indirekt mit der ersten Vorrichtung (50) gekoppelt ist, so dass die erste akustische Referenzwelle, die von dem ersten Wellengenerator (48) erzeugt wird, an den Wellenleiter (18) der ersten Vorrichtung (50) übertragen wird.

12. System (46) nach dem vorhergehenden Anspruch, wobei das System (46) eine zweite Vorrichtung (54) umfasst, die durch eine weitere Vorrichtung nach einem der vorhergehenden Ansprüche gebildet wird, wobei der Fluidkanal der ersten Vorrichtung (50) und der Fluidkanal der zweiten Vorrichtung (54) in Reihe geschaltet sind, so dass der Fluidkanal der zweiten Vorrichtung (54) dem Fluidkanal der ersten Vorrichtung (50) nachgeschaltet ist.

13. System (46) nach einem der vorhergehenden Ansprüche 11 bis 12,
wobei das System (46) eine Steuereinheit (60) umfasst, und
wobei die Steuereinheit (60) so konfiguriert ist, dass sie den ersten Wellengenerator (48) so steuert, dass der erste Wellengenerator (48) die erste Referenzwelle in einem ersten Muster mit abwechselnden aktiven Phasen und inaktiven Phasen erzeugt, was während jeder aktiven Phase des ersten Musters zu einem neuen ersten Bündel (28) von Probenpartikeln (12) in dem Anwendungsbereich (26) des Fluidkanals der ersten Vorrichtung (50) führt.

14. System (46) nach einem der vorhergehenden Ansprüche 11 bis 13,
wobei das System (46) ferner einen Strahlungsgenerator (62) und einen Strahlungsdetektor (64) umfasst,
wobei der Strahlungsgenerator (62) so angeordnet ist, dass der Applikationsbereich (26) des Fluidkanals der ersten oder zweiten Vorrichtung (50, 55) einer von dem Strahlungsgenerator (62) erzeugten Strahlung ausgesetzt wird, was zu einer modifizierten Strahlung führt, und
wobei der Strahlungsdetektor (64) so angeordnet ist, dass er die modifizierte Strahlung erkennt.

## Revendications

1. Dispositif (10) de groupage de particules d'échantillon (12), le dispositif (10) comprenant
un corps (14), qui se présente sous la forme d'une puce composée d'un matériau de corps (34) qui est un matériau de puce,
un canal de fluide (16) s'étendant à travers le corps (14), le canal de fluide (16) étant formé par le corps (14),
un guide d'ondes acoustiques (18) intégré dans le corps (14), et
un condensateur d'ondes acoustiques (20) intégré dans le corps (14),
le canal de fluide (16) formant un passage de fluide (22) à travers le corps (14), de sorte que le canal de fluide (16) est configuré pour guider un écoulement d'un fluide échantillon (24) dans lequel des particules d'échantillon (12) sont réparties, à travers le canal de fluide (16) le long du passage de fluide (22),
le guide d'ondes (18) étant configuré pour guider une onde acoustique de référence, lorsqu'elle est transmise par l'intermédiaire du corps (14) au guide d'ondes (18), vers une zone d'application (26) du canal de fluide (16),
le condensateur d'ondes (20) formant au moins partiellement la zone d'application (26) du canal de fluide (16), et
le condensateur d'ondes (20) étant configuré pour générer une onde acoustique stationnaire dans la zone d'application (26) à partir de l'onde de référence lorsque le guide d'ondes (18) guide l'onde de référence dans la zone d'application (26), ce qui produit un champ de force acoustique dans la zone d'application (26), ce qui comprime les particules d'échantillon (12), lorsqu'elles pénètrent dans la zone d'application (26), en au moins un paquet de particules d'échantillon (12) dans la zone d'application (26) ;
**caractérisé en ce que** le guide d'ondes (18) est formé par le corps (14) et qu'au moins une cavité (30) est ménagée dans le corps (14).

2. Dispositif (10) selon la revendication précédente, dans lequel chaque cavité (30) est une cavité remplie de gaz (30) ou une cavité sous vide (30).

3. Dispositif (10) selon l'une quelconque des revendications précédentes, dans lequel le guide d'ondes (18) est formé par au moins deux cavités (30) et une section de guidage (32), qui est formée par le matériau de corps (34) du corps (14), la section de guidage (32) étant disposée entre les cavités (30) et configurée pour transmettre l'onde acoustique dans la zone d'application (26).

4. Dispositif (10) selon la revendication précédente, dans lequel la section de guidage (32) présente une forme conique se rétrécissant en direction de la zone d'application (26) du canal de fluide (16).

5. Dispositif (10) selon la revendication précédente, dans lequel le condensateur d'ondes (20) est formé par au moins une section de paroi concave (36) d'une paroi de canal pour le canal de fluide (16), ladite au moins une section de paroi formant au moins partiellement la zone d'application (26) du canal de fluide (16).

6. Dispositif (10) selon la revendication précédente, dans lequel au moins un bord (38) est formé dans une zone de transition entre une section de paroi linéaire (40) de la paroi de canal et au moins une section de paroi concave (36) de la paroi de canal.

7. Dispositif (10) selon la revendication précédente, dans lequel le condensateur d'ondes (20) est formé par deux sections de paroi de la paroi de canal disposées en vis-à-vis ou par une section de paroi unique de forme annulaire de la paroi de canal.

8. Dispositif (10) selon l'une quelconque des revendications précédentes 5 à 6, dans lequel la zone d'application (26) du canal de fluide (16) est formée au moins partiellement par le condensateur d'ondes (20) de telle sorte qu'une largeur de référence (42) de la zone d'application (26) perpendiculaire à une direction de transport (44) du canal de fluide (16) corresponde à une demi-longueur d'onde de référence avec une tolérance inférieure à 10 % de la demi-longueur d'onde de l'onde de référence.

9. Dispositif (10) selon l'une quelconque des revendications précédentes, dans lequel le corps (14) est un corps monolithique.

10. Dispositif (10) selon l'une quelconque des revendications précédentes, dans lequel le matériau de corps (34) du corps (14) est à base de verre, de silicium, de métal, de diamant, de saphir, de céramique ou de plastique.

11. Système (46), comprenant
un premier générateur d'ondes (48) conçu pour générer une première référence onde de référence acoustique,
un premier dispositif (50) formé par un dispositif selon l'une quelconque des revendications précédentes, et
une pompe à fluide (52) pour générer un flux d'échantillon de fluide (24),
la pompe à fluide (52) étant couplée directement ou indirectement au canal de fluide du premier dispositif (56) pour pomper l'échantillon de fluide (24) à travers le canal de fluide du premier dispositif (56), et
le premier générateur d'ondes (48) étant couplé directement ou indirectement au premier dispositif (50) de sorte que la première onde acoustique de référence, générée par le premier générateur d'ondes (48), soit transmise au guide d'ondes (18) du premier dispositif (50).

12. Système (46) selon la revendication précédente, le système (46) comprenant un second dispositif (54) formé par un autre dispositif selon l'une quelconque des revendications précédentes, le canal de fluide du premier dispositif (50) et le canal de fluide du second dispositif (54) étant connectés en série, de sorte que le canal de fluide du second dispositif (54) est en aval du canal de fluide du premier dispositif (50).

13. Système (46) selon l'une quelconque des revendications précédentes 11 à 12, le système (46) comprenant une unité de commande (60), et l'unité de commande (60) étant configurée pour commander le premier générateur d'ondes (48), de sorte que le premier générateur d'ondes (48) génère la première onde de référence selon un premier modèle avec des périodes de marche et d'arrêt alternées, ce qui donne un nouveau premier paquet (28) de particules d'échantillon (12) dans la zone d'application (26) du canal de fluide du premier dispositif (50) pendant chaque période de marche du premier modèle.

14. Système (46) selon l'une quelconque des revendications précédentes 11 à 13, le système (46) comprenant en outre un générateur de rayonnement (62) et un détecteur de rayonnement (64),
le générateur de rayonnement (62) étant disposé de telle sorte que la zone d'application (26) du canal de fluide du premier ou du second dispositif (50, 55) soit exposée à un rayonnement généré par le générateur de rayonnement (62), ce qui entraîne une modification du rayonnement, et
le détecteur de rayonnement (64) étant conçu pour détecter le rayonnement modifié.
